(19)

Europäisches
Patentamt
European
Patent Office
Office européen
des brevets

(11) **EP 4 506 865 A1**

(12) **EUROPEAN PATENT APPLICATION**

(43) Date of publication:
**12.02.2025 Bulletin 2025/07**

(51) International Patent Classification (IPC):
**G06N 10/60** (2022.01)

(21) Application number: **23190225.5**

(52) Cooperative Patent Classification (CPC):
**G06N 10/60**

(22) Date of filing: **08.08.2023**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **Ma, Yunpu**
  **81379 München (DE)**
• **Sun, Yize**
  **80809 München (DE)**
• **Tresp, Volker**
  **81369 München (DE)**

(74) Representative: **Siemens Patent Attorneys
Postfach 22 16 34
80506 München (DE)**

(54) **AUTOMATICALLY DESIGNING A QUANTUM CIRCUIT ARCHITECTURE FOR REINFORCEMENT LEARNING**

(57) According to the present invention, there is provided a method of training an initial quantum circuit structure (1) with a reinforcement learning agent (A1, A2,..., An) for automatically designing a quantum circuit architecture. The method includes the steps of providing the initial quantum circuit structure (1) with plural qubits including a placeholder (3), wherein the placeholder (3) is a gate for two or more of the plural qubits, providing an operational pool (4) including a set of operation candidates (5) for the placeholder (3), and performing a training sequence of the initial quantum circuit structure (1) by the reinforcement learning agent (A1, A2, ..., An) to obtain the quantum circuit architecture (14) specific for the reinforcement learning agent. The training sequence comprises the steps of preparing a batch (8) of architecture candidates (9), each resulting from the initial quantum circuit structure (1), wherein the placeholder (3) is replaced in each of the architecture candidates (9) by another one of the operation candidates of the operation pool (4), calculating a global loss for all architecture candidates (9), and updating a circuit parameter of the operation candidates (5) of the operational pool (4) and an architecture parameter of an actual quantum circuit structure depending on the global loss.

**Description**

The present invention relates to a method of training an initial quantum circuit structure with a reinforcement learning agent for automatically designing a quantum circuit architecture. Moreover, the present invention relates to a method of automatically designing a quantum circuit architecture by reinforcement learning. Furthermore, the present invention relates to a respective quantum circuit architecture for reinforcement learning.

More and more studies of quantum machine learning (QML) appeared in recent years, mainly focusing on quantum supervised learning and unsupervised learning, while there are fewer studies regarding quantum reinforcement learning (QRL). Reinforcement learning (RL) can be used to solve different problems from industrial applications, for example, RL-based control optimization in the process industry, the use of distributed automation systems in the smart factory, and optimization in production planning. Combining quantum computers there is a potential to solve these problems more efficiently by using reinforcement learning methods. Some quantum reinforcement learning (QRL) algorithms have been proposed with variational quantum circuits (VQC). Some QRL algorithms embed a task environment in circuit as an interactive environment and could provide exponential improvements for quantum-accessible reinforcement learning. However, most used circuit architectures were designed by experts manually and had a fixed structure, which lacks flexibility for different reinforcement learning tasks and will become intractable in the case of a deep and wide circuit. Especially, QRL has various datasets, which strongly depend on learned experience and vary with increasing training epochs.

Currently, there is no one circuit architecture search algorithm proposed for solving reinforcement learning tasks. Most quantum architecture search (QAS) algorithms were proposed to design a circuit automatically for decreasing the noise on a quantum device and increasing circuit fidelity (error mitigation). Especially these algorithms are thus trained based just on a fixed dataset. In general, the goal of QAS algorithms can be described as follows:

$$(\theta^*, a^*) = arg\ min_{\theta \in \mathcal{C}, a \in S} \mathcal{L}(\theta, a, \mathcal{Z}, \epsilon_a) \qquad (1)$$

where $\mathcal{L}$ represents an objective function, $\theta$ denotes the parameters of an ansatz **a**, $\mathcal{C}$ is a constraint set, $\mathcal{Z}$ represents the input, and $\varepsilon_a$ denotes the quantum system noise.

The differentiable quantum architecture search (DQAS) is the state-of-the-art gradient-based algorithm for circuit architecture search based on the fixed dataset. It consists of a super-circuit and a probability model (compare: Shi-Xin Zhang, Chang-Yu Hsieh, Shengyu Zhang, and Hong Yao. Differentiable quantum architecture search. arXiv preprint arXiv:2010.08561, 2020). The super-circuit decomposes the circuit into some placeholders **p**. There is a pre-defined set of operations called operation pool denoted by $\mathcal{O}$, in which each element **o** is a quantum operation (e.g., CNOT and U3). The goal is to minimize a global cost function by optimizing both architecture parameters $\alpha$ and circuit parameters $\theta$ simultaneously using gradient descent. The concept at the core of DQAS is to sample a mini-batch of operations from $\mathcal{O}$ for placeholder **p** with corresponding probabilities, namely, $P(o, p) = \frac{e^{\alpha_{o,p}}}{\sum_o e^{\alpha_{o,p}}}$, where $\alpha_{o,p}$ is a hyper-parameter for each pair of operation and placeholder. That means the probability of an operation strongly depends on the corresponding architecture parameter value. This design makes the search space differentiable and the training process efficient. However, DQAS, as a DARTS-like algorithm, is not perfect and can have similar issues found in DARTS. DARTS, as a differentiable architecture search algorithm, is unstable in a large search space (see: Xin Chen, Lingxi Xie, Jun Wu, and Qi Tian. Progressive darts: Bridging the optimization gap for nas in the wild. International Journal of Computer Vision, 129(3):638-655, 2021). For example, some were caused by optimization gaps from different network depths, the increasing search epochs, or the high sensitivity of random initialization.

Quantum deep Q-learning (see: Andrea Skolik, Sofiene Jerbi, and Vedran Dunjko. Quantum agents in the gym: a variational quantum algorithm for deep q-learning. Quantum, 6:720, 2022) utilizes PQC $Q_\theta(s)$ (parameterized quantum circuits) instead of DQN (deep Q network) in order to approximate Q-values $Q(s,a)$, $\theta$ stands for parameters. Referring to weights of DQN, circuit parameter $\theta$ can be optimized iteratively. The measurement block is used to calculate Q-values **Q (s,a)** $= \frac{1}{2}(\langle 0^{\otimes n}|U_\theta^\dagger(s)O_a U_\theta(s)|0^{\otimes n}\rangle + 1)$ in range of **[0,1]** for each action **a** by corresponding observables $O_a$. In order to improve the training performance, quantum deep Q-learning utilizes two predictors; one predicts Q-values $Q_\theta^{pred}(s, a)$, and the other generates target-Q-values.

The object of the present invention is to efficiently design more stable performing circuits based on various datasets for solving reinforcement learning tasks.

According to the present invention this object is solved by a method and a quantum circuit architecture as set out in the independent claims. Further favorable developments are defined in the subclaims.

Thus there is provided a method of training an initial quantum circuit structure with a reinforcement learning agent for automatically desinging a quantum circuit architecture. The initial quantum circuit structure has to be trained. The training is performed by reinforcement learning. A special application called "reinforcement learning agent" is used for performing the training. In general, a reinforcement learning agent is able to perceive and interpret its environment, take actions and learn through trial and error. The training is performed automatically thereby designing the quantum circuit architecture. This means that the designed quantum circuit architecture is the result of training the initial quantum circuit structure.

In one step of the method there is provided the initial quantum circuit structure with plural qubits including a placeholder wherein the placeholder is a (composed) gate for two or more of the plural bits. The initial quantum circuit structure may also be called "super circuit". The super circuit has a plurality of inputs (and outputs) each for a qubit. Specifically, the super circuit has more than two inputs, perferably one input per qubit. The super circuit includes one or more placeholders. Each placeholder may be a block on all qubits. This means that the block has as much inputs and outputs as qubits are present. Several placeholders may be arranged in a series (deep circuit). Thus, the individual qubits are routed separately from block to block.

In a further step there is provided an operation pool including a set of operation candidates for the placeholder or specifically for each of the placeholders. Each operation candidate may contain its "working range", which indicates on which qubit the selected operation should appear. For instance, each operation candidate has a short circuit or a quantum gate on each qubit. Thus, each or at least one operation candidate acts on at least two qubits and preferably on all qubits. This setting provides an advantage to reduce the search space (number of different operation combinations). In other words, operation candidates acting on several qubits are used for replacing the placeholders during the training.

The method includes a step of performing a training sequence of the initial quantum circuit structure by the reinforcement learning agent to obtain the quantum circuit architecture specific for the reinforcement learning agent. This means that the reinforcement learning agent leads to an individual trained quantum circuit architecture. Another reinforcement learning agent may lead to another specific quantum circuit architecture.

The training sequence comprises three steps. In one step a batch of architecture candidates, each resulting from the initial quantum circuit structure, is prepared, wherein the placeholder is replaced by another one of the operation candidates of the operation pool by each of the architecture candidates. This means that a plurality of architecture candidates are provided as subcircuits which have a structure based on the initial quantum circuit structure (i.e. the super circuit). If the super circuit includes more than one placeholder, each of the placeholders may be replaced by each of the operation candidates. The number of architecture candidates may result from the number of combinations of operation candidates possible in the architecture candidates. A fixed number of placeholders should be replaced for each training time. For example, if we have four placeholders, say learning by two placeholders, the first two placeholders should be replaced first, we do nothing for the third and fourth placeholders. After some training steps, the last two placeholders should be considered. That means that the first two placeholders together with the third and fourth placeholders should be replaced by operation candidates from operation pool.

In a further step of the training sequence a global loss is calculated for all architecture candidates. The global loss may be the total or overall loss for all architecture candidates. The global loss is the expected value of some local losses. Thus, the quality of the batch of architecture candidates is assessed in total.

In a further step of the training sequence a circuit parameter of the operation candidates of the operation pool and an architecture parameter of an actual quantum circuit structure are updated, depending on the global loss. The circuit parameter may be a tensor describing the operation candidates. Further circuit parameters may be updated. The architecture parameter may be a matrix describing the structure of the quantum circuit. Specifically, the architecture parameter may indicate the type and place of the operation candidates in the several architecture candidates.

Advantageously the above method allows for efficiently designing more stable performing circuits based on various data sets for solving reinforcement learning tasks.

In one embodiment two types of Q-values are calculated for each architecture candidate as inputs for calculating the global loss: a predicted Q-value generated by the respective architecture candidate as predicting circuit having trainable parameters, and a target Q-value generated by a target circuit copying parameters from the predicting circuit periodically. The Q-values may be calculated by a measurement block of the initial quantum circuit structure. Each architecture candidate may have an individual loss value between the predicted and target Q-values. These Q-values may firstly be used to calculate the local loss. Then, the global loss may be calculated on the basis of the individual local losses.

In a further embodiment at least one operation candidate of the operation pool is eliminated during the training sequence for the rest of the training sequence, wherein the eliminated operation is assigned to a lowest probability value of probability values assigned to the operation candidates. This means, that during the training probabilities of the operation candidates in the architecture candidates are calculated, and an operation candidate is eliminated if he has the lowest probability. Thus, the search space is reduced.

In a further development the elimination is performed periodically. Thus, in each training step an operation candidate may be eliminated thereby reducing the search space.

In another embodiment each probability value depends on the architecture parameter representing a position of the placeholder within the initial quantum circuit structure and an importance value of the respective operation candidate for this position. This means that the probability value also depends on the importance of the operation candidates on a specific position. The larger the importance value is, the more important the operation candidate is on the specific position.

According to another embodiment, the training sequence is stopped, if a probability of one of the operation candidates is higher than the probabilities of the other operation candidates by pregiven value. Thus, the training is stopped when the use of all other candidates is significantly unlikely. If the initial quantum circuit structure includes more placeholders, a respective stopping procedure may be applied for each training subsequence where a respective operation candidate is being searched for.

In a further embodiment, the circuit parameter describing the operation candidates is iteratively optimized during the training sequence. The circuit parameter may be optimized by eliminating operation candidates or by varying parameters of the quantum gates of the operation candidates. Thus, the training is performed more efficiently.

According to a further embodiment, the initial quantum circuit structure includes a plurality of placeholders in series to form a deep circuit. As indicated above, the super circuit may include a series of placeholders. Thus, when the placeholders are replaced, the quantum circuit includes a series of operation candidates.

According to another embodiment, an output of the deep circuit is input to a quantum measurement block to acquire the probability of an output state. Thus, the initial quantum circuit structure may include a measurement block for evaluating the probability of each qubit. The output value of the measurement block should be a value which can be processed by a conventional computer.

In a further embodiment, the circuit parameter of the operation candidates is updated by gradient descent. Preferably, the architecture parameter is updated together with the circuit parameter based on the global loss. For updating an optimizer can be used based on gradient descent.

According to a further development, the initial quantum circuit structure (super circuit) includes several placeholders, the training sequence comprises several training subsequences, and at least one of the several placeholders is replaced in each training subsequence of the training sequence, so that at the end of the training sequence all placeholders are replaced to obtain the respective agent specific quantum circuit architecture. This means that each placeholder is replaced in a training subsequence. However, the training subsequence can overlap. Thus, the training may be structured with respect to the placeholders.

According to the present invention, there is also provided a method of automatically designing a quantum circuit architecture providing a plurality of reinforcement learning agents, training each of the reinforcement learning agents with a method according to one of the preceding claims independently from one another to obtain agent specific quantum circuit architectures, taking (a pregiven number) two or more of the agent specific quantum circuit architectures with the best performance in relation to a parameter of the training (e.g. in terms of training speed, convergence speed) and evaluating the two or more of the agent specific quantum circuit architectures for a task and taking the agent specific quantum circuit architectures with the best evaluation result for the automatically designed quantum circuit architecture (e.g. in relation to convergence to a specific target value). This performance is assesed on the evaluation phase instead of training phase.

If a plurality of reinforcement learning agents is available, a corresponding number of agent specific quantum circuit architectures can be obtained. The training of the initial quantum circuit structure may be performed by different reinforcement learning agents so that the best one can be chosen. The best performance capability in the training phase may be given in terms of training speed, convergence speed etc. Thus, the initial quantum circuit structure is trained in different ways so that different agent specific quantum circuit architectures result. A pre-given number of these agent specific quantum circuit architectures having the best training performance can be selected (first selection). From these selected quantum circuit architectures the best one in relation to the task the agent specific quantum circuit architectures are trained for is selected by evaluating them for the respective task (second selection). Specifically, the best performance capability may be given in terms of convergence to a specific target value. This performance is taken on the evaluation phase instead of the training phase.

Additionally, according to the present invention there may be provided a quantum circuit system for reinforcement learning including an initial quantum circuit structure and a controlling unit designed to perform the method as described above. The initial quantum circuit structure may be realized as the mentioned super circuit. The controlling unit may include a processor and/or a memory. The advantages and the variations of the method described above may be implemented as functional features of respective means in the quantum circuit system.

Furthermore, according to the present invention, there may be provided a computer program comprising instructions which, when the program is executed by the above-mentioned quantum circuit architecture, cause the quantum circuit architecture to carry out the method specified above.

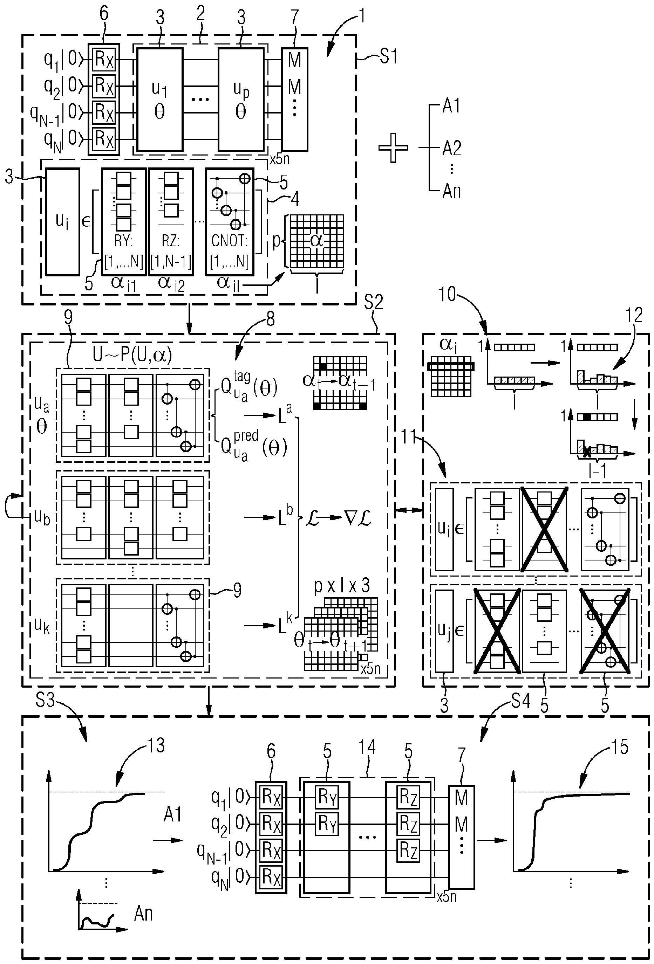

The present invention will now be described in more detail in connection with the figure showing a schematic RL-DQAS frame-work illustration.

The embodiments, which will now be described in more detail, represent preferred examples of the present invention.

For use cases or use situations which may arise in the method and which are not explicitly described here, it may be provided that, in accordance with the method, an error message and/or a prompt for user feedback is output and/or a default setting and/or a predetermined initial state is set.

Independent of the grammatical term usage, individuals with male, female or other gender identities are included within the term.

In one embodiment there is provided a (gradient-based) framework RL-DQAS (reinforcement learning differentiable quantum architecture search) to design more stable performing circuits automatically based on various datasets for solving reinforcement learning tasks using quantum deep Q-learning. In other words, there is provided a quantum circuit architecture search framework to tackle the above mentioned issues. The proposed framework is the first gradient-based quantum architecture search framework for practical reinforcement learning applications using quantum deep Q-learning. The framework could be implemented on the Noisy Intermediate-Scale Quantum (NISQ) devices.

The framework RL-DQAS with several features for solving the problem indicated above is used to design circuit architecture automatically for RL.

The algorithm RL-DQAS may include the following steps:

> Step S1: Super-circuit definition:
>
> Initialize Operation pool $\mathcal{O}$ , super-circuit with $p$ placeholders Initialize architecture parameter $\alpha$ and circuit parameter $\theta$ Initialize tar-circuit and pred-circuit Initialize environment $e$
>
> Step S2:Super-circuit training:
> while Architecture Search do
>
>> Select placeholders of one block layer-by-layer, $u_i, ..., u_{i+step}$ Sample transitions $\textbf{\textit{Data}}^{int}$ from replay memory Sample minibatch of architectures from probability model Eq: 9
>>
>> Calculate global loss $\mathcal{L}$ via Eq: 3 Update $\alpha_t$ and $\theta_t$ via gradients $\nabla\mathcal{L}_\alpha$ Eq: 15 and $\nabla\mathcal{L}_\theta$ Eq: 11 The tar-circuit copy parameter $\theta$ from pred-circuit periodically
>> Conduct progressive search with probability Eq: 10 periodically
>> Early stop training if $e \ni r^{avg} \geq r^{max} \in e$
>
> end while
> Circuit parameter tuning Early stop training by condition Step S3:Rank training performance among agents:
>
>> Take top K architectures for evaluation
>> Step S4:Evaluationofarchitectures:
>> Take the best performing architecture or retrain with new super-circuit

As shown in the figure, in step S1, a super-circuit 1 is defined, including a parameterized block 2 with placeholders 3, an operation pool 4 (also denoted as $\mathcal{O}$ comprising operation candidates 5), and trainable shared parameters for circuit gates $\theta$ (circuit parameter) and architecture $\alpha$ (architecture parameter). The super-circuit 1 includes three blocks. An encoding block 6 encodes the weighted input state into a quantum state. The parameterized block 2 contains all placeholders 3 and should be stacked to create a deep circuit. A measurement block 7 is used to provide output value for a classical computer.

In step S2 (training), we start training with multiple (reinforcement learning) agents A1, A2, ..., An. According to the current architecture distribution model $\textbf{\textit{P}},$ a batch 8 of architecture candidates 9 is sampled from the super-circuit 1. Each architecture candidate 9 shares circuit parameters $\theta$ and calculates individual loss value $\textbf{L}$ between the predicted and target Q-values ($Q^{tag}$, $Q^{pred}$) . With a global loss $\mathcal{L}$ , the shared architecture parameters $\alpha$ and circuit parameters $\theta$ can then be updated by gradient descent with optimizer Adam. Meanwhile, the corresponding probability 10 is updated as well. For every $\textbf{\textit{n}}$ iterations, the progressive search 11 checks for each placeholder 3 if one operation 5 (short for operation candidate) together with its parameter should be removed from the super-circuit 1 by comparing the corresponding architecture distribution 12. The target circuit is used to produce target Q-values. The target circuit will periodically copy the circuit values of the shared parameters. Additionally, after the architecture search, the optimal architecture is fixed. The tuning phase only updates the trained circuit parameters iteratively so that the reward converges to a given value.

After training, we rank the training performance 13 of super-circuit 1 among agents A1, A2, ..., An in step S3 and take the first $\textbf{\textit{K}}$ candidates (e.g. best training speeds). Finally, we evaluate (step S4) each agent specific quantum circuit architecture 14 as to their evaluation performance 15 to find out the best-performing architecture(s).

The algorithm definded above has some features proposed to solve training issues from DQAS and RL. On the one hand, DQAS has shown unstable performance in large search space, resulting from a DARTS-like algorithm. So we adopt the progressive search technique, layer-by-layer learning, and the early stopping method. On the other hand, some other features are inspired by quantum deep Q-learning. We refer to the data re-uploading for RL-DQAS, the input weights, and the output weights. These weights are used to scale input $w^{in} \times s$ and outputs $w^{out} \times Q(s,a)$. This way, DQAS has high flexibility and sensitivity for input and output data.

Among these features, the progressive search, input weights, and output weights are first mentioned and used together with DQAS in the framework. Now, we describe these new features.

The progressive search method can reduce the gap between the super-circuit and sub-circuit. For every placeholder, the least important operation $o_i = arg\ min_o \alpha_{io}$ will be removed gradually until only two operations are left, or it reaches a predefined epoch limit. That means the search space shrinks periodically. The fewer operation candidates a placeholder has, the closer the gap between the super-circuit and the sub-circuit is. This new feature could improve the training performance, especially in the case of a large number of operation candidates. The figure shows this mechanism abstractly.

We will introduce input weights and output weights together with our objective function and the corresponding gradients. The objective function takes two Q-values as inputs, created from two quantum circuits. One circuit (predicting circuit) has trainable parameters $\theta$, and the other (target circuit) copies parameters from predicting circuit periodically and generates target Q-values. The predicted Q-value should gradually converge to the target Q-value. The local objective $L(U,\theta)$ is calculated as the mean squared error (MSE) between predicted Q-values and target Q-values:

$$L(U, \theta) = (Q_{U,\theta}^{pred} - Q_{U,\theta^*}^{tar})^2 \qquad (2)$$

, where $U$ stands for circuit architecture and $\theta$ represents circuit parameter tensor. The global objective function is defined as the total sum of local objectives according to the architecture distribution model $P(U,\alpha)$. Then, the global objective for RL-DQAS takes the form:

$$\mathcal{L} = \sum_{U \sim P(U,\alpha)} L(U, \theta)$$
$$(3)$$

The Q-value for action $a \in A$ is calculated by the circuit measurement with the corresponding observable $O_a$. For example, the measurement outcome $M_{\theta,U}$ in an $n$-qubits system is calculated by

$$M_{\theta,U}(s, a) = \langle 0^{\otimes n} | U_\theta^\dagger(Enc(s)) O_a U_\theta(Enc(s)) | 0^{\otimes n} \rangle \in [-1,1] \qquad (4)$$

, where $s$ is the input state, the $U_\theta$ denotes trainable unitaries with parameter tensor $\theta$. $0^{\otimes n}$ is the initial state of the circuit. In order to compare Q-values easily, we shift and scale the measurement result by $1$ and $\frac{1}{2}$ respectively, then the Q-value for each action reads:

$$Q_{\theta,U}^{pred}(s, a) = \frac{M_{\theta,U}(s,a)+1}{2} \in [0,1] \qquad (5)$$

For each action, we calculate one Q-value and gather them together into a vector as the circuit output. Examples of observables and the corresponding output vector are shown as follows:

- In the case the cart pole has an action space $A = \{left,right\}$, the corresponding observables in a 4-qubits system will be $O_{a=l} = Z_1 \otimes Z_2 \otimes 1 \otimes 1$ and $O_{a=r} = 1 \otimes 1 \otimes Z_3 \otimes Z_4$, where $Z_i$ denotes a pauli Z-gate on qubit $i$. The corresponding Q-values could be $[Q^{left}, Q^{right}] = [0.81, 0.27]$ .
- In the case the frozen lake has an action space $A' = \{up,down,left,right\}$, the four observables will be $O_{a=left} = 1 \otimes 1 \otimes 1 \otimes Z_4$, $O_{a=down} = 1 \otimes 1 \otimes Z_3 \otimes 1$, $O_{a=right} = 1 \otimes Z_2 \otimes 1 \otimes 1$ and $O_{a=up} = Z_1 \otimes 1 \otimes 1 \otimes 1$. The corresponding output vector could be $[Q^{left}, Q^{down}, Q^{right}, Q^{up}] = [0.27, 0.11, 0.81, 0.70]$ .

The target circuit with parameters $\theta^*$ adopts the same architecture from predicting circuit. The generated target output value reads:

$$Q_{\theta^*,U^*}^{tar}(s_t, a_t) = \begin{cases} r_t & \text{if done} \\ \gamma M_{\theta^*,U^*}(s_t, a_t) + r_t & \text{otherwise} \end{cases} \tag{6}$$

, where $\gamma$ is a discount factor and $r_t$ is the reward from step $t$. Additionally, we utilize the output weight $w^{out}$ in the cart pole environment to adjust the output range. The Q-values in a 4-qubits system now reads

$$Q(s, a) = M_{\theta,U}(s, a) * w_{O_a}^{out} \tag{7}$$

This framework uses a simple independent probabilistic model (compare probability 10 in step S2) with its assumptions - the "naive mean field model." The idea of the naive mean field model is to approximate a joint distribution through the factorization of distribution over all latent variables (Xing Eric, P., Yang Shichao, Li Mengtian, and Fan Haoqi. 13 : Mean field approximation and topic models. http://www.cs.cmu.edu/~epxing/Class/10708-16/note/10708_scribe_lecture13.pdf, 2016. Accessed: 2022-08-14) :

$$p(x_1, x_2, .., x_z) = \prod_i p(x_i) \tag{8}$$

$U = \Pi_i u_i$ denotes the unitary matrix of placeholders, where $u_i$ is the unitary of the $i$-th placeholder. $\alpha$ is the shared architecture parameter matrix, and $o_j$ is the selected operation for the $i$-th placeholder. Let $P(U,\alpha)$ be the probability model, which takes variables $U$ and $\alpha$. The assumption and the model can be described below:
Assumption 1 (Architecture distribution): The true distribution of architecture candidates is approximated through the complete factorization over all placeholders $U$.

$$P(U, \alpha) = \prod_i p(u_i, \alpha_i) \tag{9}$$

Definition 1 (Operation probability): With respect to $\alpha_i$, the probability **p** for the **i**-th placeholder to choose the operation $o_j$ is:

$$p(u_i = o_j, \alpha_i) = \frac{e^{\alpha_{ij}}}{\sum_{o \in \mathcal{O}} e^{\alpha_{io}}} \tag{10}$$

Examples of using the assumptions above are as follows:

- By saying that Assumption 1 is satisfied, the probability of a By saying that Assumption 1 is satisfied, the architecture probability is determined by the production of probabilities of corresponding placeholders throughout the entire circuit. Since circuits in this framework are created by stacking multiple blocks with the same structure, the probability $P(U,\alpha)$ is calculated concerning placeholders $u_i$ in one block.

- According to the Definition 1, if we initialize the architecture parameter vector $\alpha_i = $ **[0,0,0,0]** for operation candidates of the $i$-th placeholder $u_i$, the probability of choosing operation $o_1$ is calculated as $p(u_i = o_1, \alpha_i) = \frac{e^0}{4*e^0} = 0.25$ .

In order to calculate the global loss, we only need to sample a batch 8 of architecture candidates 9 according to this probability model $P(U,\alpha)$ without taking all of them. The batch size is set to **10** as a hyper-parameter in this framework. Indeed, when we review the equations 9 and 10, we find that the task has been transformed from searching for an optimal architecture to approximating the true distribution $P(U,\alpha)$. This approximation can be realized by iteratively updating the architecture parameters $\alpha$ through the gradient descent method.
In order to design an extraordinary circuit automatically, we will iteratively update the parameters by gradient descent, including the circuit parameter tensor $\theta$, the architecture parameter matrix $\alpha$, and the input weights $w^{in}$, the output weights $w^{out}$ if needed. Since the circuit tensor $\theta$ is independent of the architecture distribution, its gradient takes the form:

$$\nabla_\theta \mathcal{L} = \sum_{U \sim P(U,\alpha)} \nabla_\theta L(U, \theta) \tag{11}$$

In practice, this gradient derives from the parameter shift rules (Gavin E Crooks. Gradients of parameterized quantum gates using the parameter-shift rule and gate decomposition. arXiv preprint arXiv:1905.13311 , 2019). However, the architecture parameter matrix $\alpha$ is related to the architecture distribution. Therefore, the gradient with respect of $\alpha$ is discussed in many fields.

For the input weights and output weights, the gradients take the form respectively:

$$\nabla_{w^{in}}\mathcal{L} = \sum_{U \sim P(U,\alpha)} \nabla_{w^{in}} L(U,\theta) \tag{12}$$

$$\nabla_{w^{out}}\mathcal{L} = \sum_{U \sim P(U,\alpha)} \nabla_{w^{out}} L(U,\theta) \tag{13}$$

We refer to Monte Carlo gradients. To calculate it, we will adopt the score function estimator, which calculates the gradient of the log-likelihood function. The gradient regarding $\alpha$ with a proof reads

$$\nabla_{\alpha}\mathcal{L} = \sum_U \nabla_\alpha \frac{P(U,\alpha)}{S(\alpha)} L(U)$$

$$\begin{aligned}
&= \sum_U \frac{P(U,\alpha)}{S(\alpha)} \left(\frac{\nabla_\alpha P(U,\alpha)}{P(U,\alpha)} L(U)\right) - \frac{P(U,\alpha)}{S(\alpha)} \left(\frac{\nabla_\alpha S(\alpha)}{S(\alpha)} L(U)\right) \\
&= \sum_U \frac{P(U,\alpha)}{S(\alpha)} \nabla_\alpha \ln P(U,\alpha) L(U) - \frac{P(U,\alpha)}{S(\alpha)} \nabla_\alpha \ln P(U,\alpha) \sum_U L(U) \\
&= \sum_{U \sim P} \nabla_\alpha \ln P(U,\alpha) L(U) - \sum_{U \sim P} \nabla_\alpha \ln P(U,\alpha) \sum_{U \sim P} L(U)
\end{aligned} \tag{14}$$

, where $S(\alpha) = \sum_U P(U,\alpha)$.

The first term is calculated by

$$\nabla_{\alpha_{ij}} \ln P(u_i = o_j, \alpha_{ij}) = -P(u_i = o_j, \alpha_{ij}) + 1 \tag{15}$$

In the case of a normalized probability model, the second term will vanish due to its zero mean ($\sum_{U \sim P(U,\alpha)} \nabla_\alpha \ln P(U,\alpha) = 0$). The score function has a high variance in the Monte Carlo method, which should be mitigated by the control variates technique or reduction of a constant. Referring to the method of using an average of $L$ as the constant, the local loss in Eq. 2 will become $L = L - \bar{L}$.

Another two used features (early stopping and Layer-by-layer learning) are mentioned in DQAS but only tested with the fixed dataset. We will make a brief introduction here.

The early stopping technique is used in DQAS to avoid getting into a local optimum (Sam McArdle, Tyson Jones, Suguru Endo, Ying Li, Simon C Benjamin, and Xiao Yuan. Variational ansatz-based quantum simulation of imaginary time evolution. npj Quantum Information , 5(1) :1-6, 2019). The performance issue brought by the increase of epochs was ascribed to the sub-optimal policy problem and the unstable architecture parameters rank. This technique can improve the training performance with only a small change. A training procedure will be stopped under a given condition.

The condition for the architecture search is a significantly high probability, which is related to the architecture learning rate and training epochs. The placeholder training process will be stopped if one of the operation candidates has a high probability over all the others (e.g., $p = 0.7$). We could control this condition with training epochs for a large learning rate. In such a way, the training process could be more efficient. The operation with the highest probability is then fixed on the super-circuit without freezing its parameters.

Layer-by-layer (Andrea Skolik, Jarrod R McClean, Masoud Mohseni, Patrick van der Smagt, and Martin Leib. Layerwise learning for quantum neural networks, 3(1) :1-11, 2021) is developed in DQAS to improve the training performance on a deep circuit. The idea is that the super-circuit is first trained with a few placeholders. Rest placeholders will be added layer by layer to the parameterized block for further training. During this process, the circuit architecture becomes more and more definite while more placeholders are fixed. This method can reduce the number of architecture candidates during training or the gap between the super-circuit and the optimal sub-circuit.

After the entire circuit architecture is fixed, circuit parameters will be further tuned. This process will be stopped by meeting the early stopping condition or reaching the epoch upper limit.

In summary, there is proposed a gradient-based frame-work RL-DQAS, which can be used to design circuits automatically based on various datasets for reinforcement learning tasks. The effectiveness of the present framework can be shown with the known reinforcement learning application "Cart Pole".

One advantage is the high efficiency and stability. In the case of a large operation pool, the gap between the super-circuit and the sub-circuit could be reduced efficiently because the progressive search removes bad operation candidates 5 from the operation pool 4 according to their probability 10. As a training process, the super-circuit 1 thus includes fewer and fewer operation candidates 5 for each placeholder 3. In other words, the search space becomes smaller and smaller during efficient training with the help of the new feature - progressive search.

The new feature - input weights and output weights mentioned above could increase the training stability and efficiency as well.

A further advantage is the tolerace to real device noises. The framework uses parametric gates, and the model performance is relatively insensitive to the system noises, for example, the noises from loading the data or the noises from the measurement of the ancilla qubit. This is because the parameters are learned by minimizing the loss via back-propagation. This type of learning algorithm always brings the model to a flat minimum of the loss function. Thus, after minimization, the model is relatively tolerant to the system noise. Therefore, it can be tested on near-term intermediate-scale noisy quantum devices.

**Claims**

1.  Method of training an initial quantum circuit structure (1) with a reinforcement learning agent (A1, A2, ..., An) for automatically designing a quantum circuit architecture, including the steps of:

    - providing the initial quantum circuit structure (1) with plural qubits including a placeholder (3), wherein the placeholder (3) is a gate for two or more of the plural qubits,
    - providing an operation pool (4) including a set of operation candidates (5) for the placeholder (3),
    - performing a training sequence of the initial quantum circuit structure (1) by the reinforcement learning agent (A1, A2, ..., An) to obtain the quantum circuit architecture (14) specific for the reinforcement learning agent,
    - the training sequence (S2) comprising:

      • preparing a batch (8) of architecture candidates (9), each resulting from the initial quantum circuit structure (1), wherein the placeholder (3) is replaced by another one of the operation candidates (5) of the operation pool (4) by each of the architecture candidates (9),
      • calculating a global loss for all architecture candidates (9),
      • updating a circuit parameter of the operation candidates (5) of the operation pool (4) and an architecture parameter of an actual quantum circuit structure depending on the global loss.

2.  Method according to claim 1, wherein as inputs for calculating the global loss, two types of Q-values are calculated for each architecture candidate (9): a predicted Q-value generated by the respective architecture candidate (9) as predicting circuit having trainable parameters, and a target Q-value generated by a target circuit copying parameters from the predicting circuit periodically.

3.  Method according to claim 1 or 2, wherein during the training sequence (S2) at least one operation candidate (5) of the operation pool (4) is eliminated for the rest of the training sequence, wherein the eliminated operation candidate is assigned to a lowest probability value of probability values assigned to the operation candidates (5).

4.  Method according to claim 3, wherein the elimination is performed periodically.

5.  Method according to claim 3 or 4, wherein each probability value depends on the architecture parameter representing a position of the placeholder (3) within the initial quantum circuit structure (1) and an importance value of the respective operation candidate (5) for this position.

6.  Method according to one of the preceding claims, wherein the training sequence (S2) is stopped, if a probability of one of the operation candidates (5) is higher than the probabilities of the other operation candidates (5) by a pregiven value.

7.  Method according to one of the preceding claims, wherein the circuit parameter describing the operation candidates (5) is iteratively optimized during the training sequence (S2).

8.  Method according to one of the preceding claims, wherein the initial quantum circuit structure (1) includes a plurality of placeholders (3) in series to form a deep circuit.

9. Method according to claim 8, wherein an output of the deep circuit is input to a quantum measurement block (7) to acquire the probability of an output state.

10. Method according to one of the preceding claims, wherein the circuit parameter of the operation candidates (5) is updated by gradient descent.

11. Method according to one of the preceding claims, wherein the initial quantum circuit structure (1) includes several placeholders (3), the training sequence (S2) comprises several training subsequences, and at least one of the several placeholders (3) is replaced in each training subsequence of the training sequence (S2), so that at the end of the training sequence all placeholders (3) are replaced to obtain the respective agent specific quantum circuit architecture (14).

12. Method of automatically designing a quantum circuit architecture

   - providing a plurality of reinforcement learning agents (A1, A2, ..., An),
   - training each of the reinforcement learning agents (A1, A2, ..., An) with a method according to one of the preceding claims independently from one another to obtain agent specific quantum circuit architectures (14),
   - taking two or more of the agent specific quantum circuit architectures (14) with the best performance in relation to a parameter of the training and
   - evaluating the two or more of the agent specific quantum circuit architectures (14) for a task and taking the agent specific quantum circuit architecture (14) with the best evaluation result for the automatically designed quantum circuit architecture.

13. Quantum circuit system for reinforcement learning, including:

   - an initial quantum circuit structure (1) and
   - a controlling unit designed to perform the method according to one of the preceding claims.

14. Computer program comprising instructions which, when the program is executed by the quantum circuit architecture of claim 13, cause the quantum circuit architecture to carry out the method of one of the claims 1 to 12.

Europäisches
Patentamt

European
Patent Office

Office européen
des brevets

# EUROPEAN SEARCH REPORT

Application Number

EP 23 19 0225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG SHI-XIN ET AL: "Differentiable quantum architecture search", QUANTUM SCIENCE AND TECHNOLOGY, vol. 7, no. 4, 24 August 2022 (2022-08-24), page 045023, XP093122160, ISSN: 2058-9565, DOI: 10.1088/2058-9565/ac87cd Retrieved from the Internet: URL:https://iopscience.iop.org/article/10.1088/2058-9565/ac87cd/pdf> * the whole document * | 1-14 | INV. G06N10/60 |

-----

TECHNICAL FIELDS
SEARCHED (IPC)

G06N

The present search report has been drawn up for all claims

| Place of search | Date of completion of the search | Examiner |
|---|---|---|
| The Hague | 23 January 2024 | Szymanski, Francois |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
............................................................................
& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHI-XIN ZHANG** ; **CHANG-YU HSIEH** ; **SHENGYU ZHANG** ; **HONG YAO**. Differentiable quantum architecture search. *arXiv:2010.08561*, 2020
- **XIN CHEN** ; **LINGXI XIE** ; **JUN WU** ; **QI TIAN**. Progressive darts: Bridging the optimization gap for nas in the wild. *International Journal of Computer Vision*, 2021, vol. 129 (3), 638-655
- **ANDREA SKOLIK** ; **SOFIENE JERBI** ; **VEDRAN DUNJKO**. Quantum agents in the gym: a variational quantum algorithm for deep q-learning. *Quantum*, 2022, vol. 6, 720
- **XING ERIC, P.** ; **YANG SHICHAO** ; **LI MENGTIAN** ; **FAN HAOQI**. *13 : Mean field approximation and topic models*, 2016, http://www.cs.cmu.edu/~epxing/-Class/10708-16/note/10708_scribe_lecture13.pdf
- **GAVIN E CROOKS**. Gradients of parameterized quantum gates using the parameter-shift rule and gate decomposition. *arXiv:1905.13311*, 2019
- **SAM MCARDLE** ; **TYSON JONES** ; **SUGURU ENDO** ; **YING LI** ; **SIMON C BENJAMIN** ; **XIAO YUAN**. Variational ansatz-based quantum simulation of imaginary time evolution. *npj Quantum Information*, 2019, vol. 5 (1), 1-6
- **ANDREA SKOLIK** ; **JARROD R MCCLEAN** ; **MASOUD MOHSENI** ; **PATRICK VAN DER SMAGT** ; **MARTIN LEIB**. *Layerwise learning for quantum neural networks*, 2021, vol. 3 (1), 1-11